# EUROPEAN PATENT APPLICATION

(11) **EP 4 202 911 A1**
(43) Date of publication of application: **28.06.2023**
(21) Application number: 22205234.2
(22) Date of filing: 03.11.2022
(51) Int. Cl.: G09G 5/00, G09G 5/12, G06F 3/14

(54) **INTERFACE EXTENSION DEVICE FOR SCREEN SHARING**

(30) Priority: 24.12.2021 TW 110148776
(71) Applicant: Magic Control Technology Corporation, New Taipei City 236658 (TW)
(72) Inventor: LIU, Pei-Chung, 235 New Taipei City (TW)
(74) Representative: TBK

(57) **Abstract**

Provided is an interface extension device for screen sharing, including at least one video port; at least one multi-function port; a first sharing port; a second sharing port; a multi-function control unit connected to the at least one multi-function port and the first sharing port; a bridge unit connected to the multi-function control unit and the second sharing port; and an image control unit connected to the multi-function control unit and the at least one video port. The bridge unit controls a data transmission between the first sharing port and the second sharing port. A screen connected to the at least one video port can display an image in a mirroring or extending manner by a first sharing device connected to the first sharing port and a second sharing device connected to the second sharing port through the data transmission, and the first sharing device and the second sharing device can perform a synchronous operation on the image.

## Description

### CROSS-REFERENCE TO RELATED APPLICATION

This application claims the priority of Taiwanese patent application No. 110148776, filed on December 24, 2021, which is incorporated herewith by reference.

### BACKGROUND OF THE INVENTION

### 1. Field of the Invention

The present invention relates to an interface extension device, and in particular to an interface extension device for screen sharing.

### 2. The Prior Arts

When multiple terminals, such as mobile phones, tablet PCs and computers, share images, keyboards, video and audio, a high-complicated and high-cost server network is generally used. The above media sharing can only be performed through the server, and thus their interactive operations become very difficult.

In addition, the existing terminals are equipped with data interfaces, such as earphones, USB interfaces or Type-C interfaces, to connect other terminals, such as mobile phones, tablet PCs, and computers. However, the number of data interfaces used by the terminals is limited so as to limit the number of the connected terminals.

TW M544147 discloses a docking station for dual display screen synchronous output, including a housing and an electrical module mounted in the housing. The electrical module is a circuit board including conducting contacts and a circuit layout arranged thereon. A control system installed in the circuit board comprises a main control unit supporting USB Type-C interface specification, an image signal processing unit electrically connected to the main control unit and adapted for receiving a display port signal and converting the display port signal into an analog signal and a digital signal for synchronous output; and a USB signal processing unit electrically connected to the main control unit and adapted for converting a USB signal into multiple USB signals for output; a transmission cable assembly electrically connected to the control system through the circuit layout and the conducting contacts and extended out of the housing for the connection of an external electronic apparatus; an image output interface electrically connected to the image signal processing unit, the image output interface comprising an analog signal output port and a digital signal output port and adapted for respectively receiving the outputted analog signal and digital signal from the image signal processing unit for output to a respective external display device for display; and a connector module electrically connected to the USB signal processing unit and adapted for receiving the the multiple USB signals for output to multiple external apparatuses for two-way power and data transmission. However, the patent cannot achieve more effective operation and interaction between multiple apparatuses for sharing images.

CN 107168666A discloses a system and method for audio and video transmission and multi-screen mapping based on a USB interface. The system with a self-mapping function includes: a target device with a USB interface and/or a video reading and playback function, used as a carrier for screen mapping; and a mapping device with a USB virtual file system, which is configured to be connected to the target device by the USB interface of the Mass Storage protocol based on the USB standard, wherein the target device obtains dynamically generated data by accessing the USB virtual file system. The system with a receiving function includes: a source device, used as a device for screen mapping; a target device with a USB interface and/or a video reading and playback function, used as a screen of the source device or a carrier for audio and video mapping; and a mapping device with a USB virtual file system, which is configured to be connected to the target device by the USB interface, wherein the target device obtains dynamically generated data by accessing the USB virtual file system. This system overcomes the problems and limitations in the prior art, which requires that both of the source device and the target device have the same protocol capability or have an HDMI interface to perform screen mapping. However, the patent cannot achieve more effective operation and interaction between multiple devices for sharing images.

US 2006/0,002,315 A1 discloses a system and method for providing screen sharing techniques to selectively share portions of the screen between a source node and a consumer node. The source node such as a computer of a presenter of an online meeting may transmit screen data to a consumer node such as a computer of an attendee of the online meeting. The consumer or attendee's computer uses the screen data to display the screen of the source or presenter's computer. The techniques of the invention provide a mechanism for not sharing a selective portion of the presenter's screen during screen sharing. So, although a certain element may be displayed on the screen of the presenter, the invention prevents an attendee from viewing the user interface element in the screen share session. This patent cannot achieve more effective operation and interaction between multiple devices for sharing images.

Therefore, it is necessary to propose a technical solution that allows multiple terminals, such as mobile phones, tablet PCs and computers, to share media more effectively.

### SUMMARY OF THE INVENTION

In order to effectively solve the above problems, the present invention provides an interface extension device for screen sharing, which comprises at least one video port, at least one multi-function port, a first sharing port, a second sharing port, a multi-function control unit, a bridge unit, and an image control unit. The multi-function control unit is connected to the at least one multi-function port and the first sharing port. The bridge unit is connected to the multi-function control unit and the second sharing port. The image control unit is connected to the multi-function control unit and the at least one video port. The bridge unit controls a data transmission between the first sharing port and the second sharing port. A screen connected to the at least one video port can display an image in a mirroring or extending manner by a first sharing device connected to the first sharing port and a second sharing device connected to the second sharing port through the data transmission, and the first sharing device and the second sharing device can perform a synchronous operation on the image.

According to an embodiment of the present invention, the interface extension device further includes a power unit connected to the multi-function control unit and the image control unit, and connected to a power connection port.

According to an embodiment of the present invention, the first and second sharing ports may be a USB Type-C port.

According to an embodiment of the present invention, the at least one video port may be an HDMI port.

According to an embodiment of the present invention, the at least one multi-function port includes a network port, a card reader port, and a USB 3.0 port.

According to an embodiment of the present invention, wherein the synchronous operation includes drag operation, zoom-in operation, and zoom-out operation.

Through the interface extension device of the present invention, in addition to allowing multiple terminals, such as mobile phones, tablet PCs and computers, to share media more effectively, it also allows multiple terminals to share/operate the media content of each other.

### BRIEF DESCRIPTION OF THE DRAWINGS

FIG. 1 is a block diagram of an interface extension device according to an embodiment of the present invention;
FIG. 2 is a schematic diagram of an interface extension device according to an embodiment of the present invention; and
FIG. 3 is a block diagram of an interface extension device according to another embodiment of the present invention.

### DETAILED DESCRIPTION OF THE PREFERRED EMBODIMENT

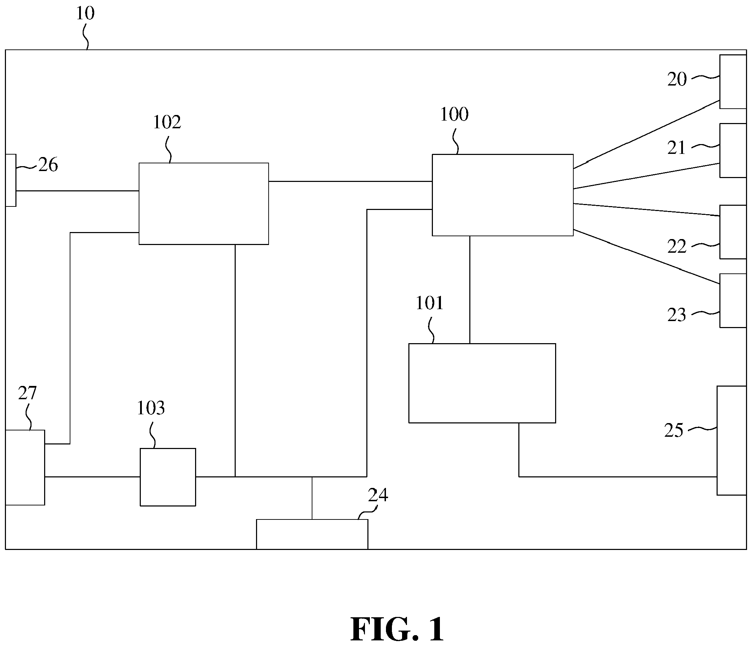

Please refer to FIG. 1. FIG. 1 is a block diagram of an interface extension device according to an embodiment of the present invention. As shown in FIG. 1, the present invention provides an interface extension device 10 for screen sharing, which comprises at least one video port 26, at least one multi-function port 20, 21, 22 and 23, at least one sharing port including a first sharing port 24 and a second sharing port 25, a multi-function control unit 100, a bridge unit 101, and an image control unit 102. The multi-function control unit 100 is connected to the at least one multi-function port 20, 21, 22 and 23 and the first sharing port 24.

In an embodiment of the present invention, the at least one multi-function port includes USB 3.0 ports 20 and 21, a card reader port/ memory card port 22, and a network port 23 for inserting a memory card and connecting a network. The bridge unit 101 is connected to the multi-function control unit 100 and the second sharing port 25. In this embodiment, the first sharing port 24 and the second sharing port 25 may be a USB Type-C port, and are used to connect laptops, desktop computers, tablet PCs, etc. The video control unit 102 connects the multi-function control unit 100 and the at least one video port 26, and the at least one video port 26 may be an HDMI port used to connect a main screen for sharing the content displayed thereon. The bridge unit 101 controls a data transmission between the first and second sharing ports 24 and 25 and thus controls operations between the laptops, desktop computers, tablet PCs, etc. connected to the first and second sharing ports 24 and 25.

According to the embodiment of the present invention, the multi-function control unit 100 may include or be implemented as a USB 3.1 Gen 1 hub controller, such as VIA Labs, Inc.'s product VL817 or Genesys Logic, Inc.'s product GL3523. The card reader port/ memory card port 22 may include or be implemented as a USB 3.1 Gen 1 Dual/Single LUN card reader controller, such as Genesys Logic, Inc.'s product GL3224.

According to the embodiment of the present invention, the video control unit 102 may include or be implemented as a Display Port (DP) to HDMI video interface converter, such as ITE Tech, Inc.'s product IT6563 or Parade Technologies, Ltd.'s product PS176.

According to the embodiment of the present invention, the bridge unit 101 may include or be implemented as a USB 3.0 Host to Host bridging Controller, such as Magic Control Technology Corp.'s product WH89, specially designed for connecting two USB Host systems either between desktop/laptop PC, tablet PC, smartphone, or smart TV. The WH89 uses "Hybrid Multi-Class" channel that allows two USB host systems to share their keyboard, mouse, network, mass storage, display, and multimedia capabilities. The WH89 links two USB hosts to exchange data through mass storage class driver or RNDIS (Remote Network Driver Interface Spec). Both USB sides support USB mass storage mode that allows the host system automatically launching the custom application which stored in external flash memory. The WH89 also provides flexible endpoint assignment mechanism to easily support multi-USB class protocol.

It should be noted that in other embodiments, the number of the at least one video port, the at least one multi-function port, and the at least one sharing port can be increased according to actual needs. These embodiments are only for illustrative examples, not for limiting the present invention.

In addition, the interface extension device 10 includes a power unit 103 connected to the multi-function control unit 100 and the image control unit 102, and connected to a power port 27, i.e., a USB Type-C port.

According to the embodiment of the present invention, the power unit 103 may include or be implemented as a Type-C power delivery controller, such as Realtek Semiconductor Corp.'s product RTS5400, Texas Instruments Incorporated's product TPS65994AD, or Genesys Logic, Inc.'s product GL9510. Alternately, the power unit 103 may include or be implemented as a Display Port alternate mode controller, such as VIA Labs, Inc.'s product VL100.

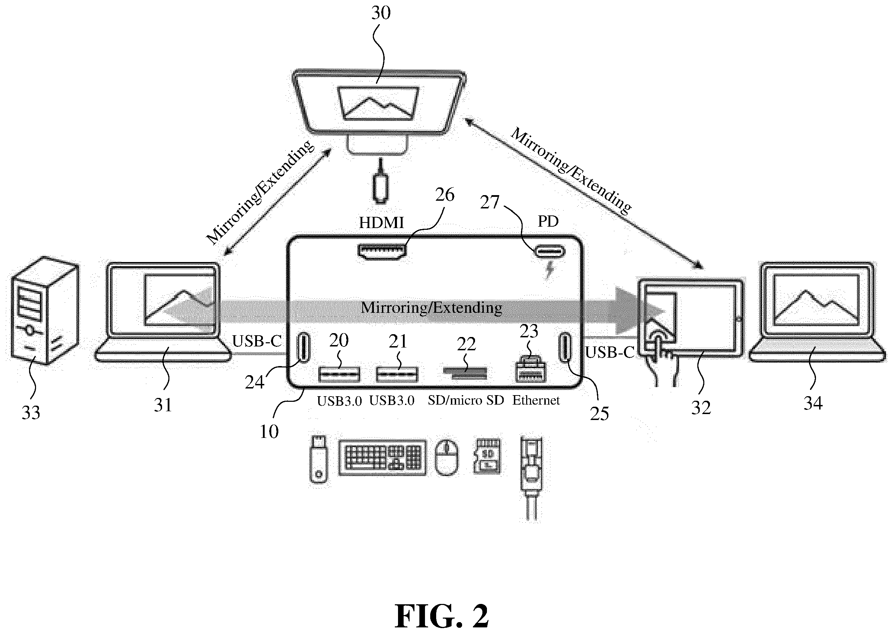

Please refer to FIG. 2. FIG. 2 is a schematic diagram of an interface extension device according to an embodiment of the present invention. The video port 26 connects a screen 30. The first sharing port 24 connects a laptop 31 or a desktop computer 33, and the second sharing port 25 connects a tablet PC 32 or a laptop 34. The interface extension device 10 can be powered by the power port 27. The USB 3.0 ports 20 and 21 can be connected to a keyboard, a mouse, other input devices, or a flash drive, the card reader port/ memory card port 22 can be inserted into an SD/ micro SD card, and the network port 23 allows the interface extension device 10 to be connected to a network. The laptop 31 or the desktop computer 33 is connected to the first sharing port 24 of the interface extension device 10 to be served as a sharing terminal of an image on the screen 30 in a mirroring or extending manner, and the tablet PC 32 or the laptop 34 is connected to the second sharing port 25 of the interface extension device 10 to be served as another sharing terminal of the image on the screen 30 by an mirroring or extending manner. Meanwhile, the bridge unit 101 controls a data transmission between the first and second sharing ports 24 and 25. The sharing terminal and the other sharing terminal of the interface extension device 10 may share/operate the image in a mirroring or extending manner. The sharing devices, i.e., the laptop 31 or the desktop computer 33 and the tablet PC 32 or the laptop 34, connected to the corresponding sharing ports for image sharing are only for illustrative examples, not for limiting the scope of the present invention. Any device with a screen and a USB Type-C interface, such as smart phones and handheld consoles, can be used as the sharing terminal of the interface extension device 10 of the present invention.

In another embodiment, any sharing devices in the sharing terminal and the other sharing terminal can perform a synchronous operation on the image through a corresponding input device. For example, the laptop 31 of the sharing terminal and the tablet PC 32 of the other sharing terminal can also share the image in a mirroring or extending manner, and the image can be adjusted in size, dragged, etc. through a touch function of the tablet PC 32. Similarly, the image can also be adjusted in size, dragged, etc. through a corresponding built-in keyboard or mouse of the laptop 31 (or a keyboard and a mouse connected to the USB 3.0 ports 20 and 21, respectively). These operations may be synchronously displayed in a mirroring or extending manner on all sharing devices of the sharing terminal and the other sharing terminal for sharing the image.

It should be noted that, in other embodiments, the interface extension device 10 may include more sharing terminals. That is, in addition to the first and second ports 24 and 25, more sharing ports for connecting other sharing devices may be included. Meanwhile, all sharing devices connected to the sharing ports can share/operate the image in a mirroring or extending manner.

In another embodiment, when all sharing devices connected to the sharing ports share/operate a screen image in a mirroring or extending manner, any two of the sharing devices may form an interactive control system, each sharing device has a screen displaying the screen image, and the screens of the two sharing devices are used as an extended screen of each other. The two screens of the two sharing devices may be spliced into a source screen for sharing with each other. For example, the two sharing devices are a first sharing device connected to the first sharing port 24 and a second sharing device connected to the second sharing port 25. A screen of the second sharing device is an extended screen of the first sharing device. At least one application or object displayed on the extended screen can be operated, and the screen of the first sharing device may synchronously present the operational results of the second sharing device. When the extended part of the first sharing device on the second sharing device is dragged in the second sharing device, the content on the screen of the first sharing device may also be moved together. When the extended part of the first sharing device on the second sharing device is clicked in the second sharing device, the content on the screen of the first sharing device may also present the selected object by clicking, or simultaneously present an application window started by clicking. When the extended part of the first sharing device on the second sharing device is zoomed in or out in the second sharing device, the content on the screen of the first sharing device may also present the zoomed in or zoomed out result. Furthermore, when the extended part on the second sharing device is operated on the second sharing device, an operation performed on the screen of the first sharing device may also present an operational result on both the first and second sharing devices. For example, when the extended part of the first sharing device on the second sharing device is dragged, the content on the screen of the first sharing device may also be moved together, and meanwhile, if the screen of the first sharing device is dragged, the content on the screen of the second sharing device may also be moved together; if the screen on the first sharing device is clicked, the content on the screen of the second sharing device may also present the selected object by clicking, or simultaneously present an application window started by clicking; if the screen of the first sharing device is zoomed in/out, the content on the screen of the second sharing device may also present the zoomed in or zoomed out result. When the extended part of the first sharing device on the second sharing device is clicked, the content on the screen of the first sharing device may also present the selected object by clicking, or simultaneously present an application window started by clicking, and meanwhile, if the screen of the first sharing device is dragged, the content on the screen of the second sharing device may also be moved together; if the screen of the first sharing device is clicked, the content on the screen of the second sharing device may also present the selected object by clicking, or simultaneously present an application window started by clicking; if the screen of the first sharing device is zoomed in/out, the content on the screen of the second sharing device may also present the zoomed in or zoomed out result. When the extended part of the first sharing device on the second sharing device is zoomed in/out, the content on the screen of the first sharing device may also present the zoomed in or zoomed out result, and meanwhile, if the screen of the first sharing device is dragged, the content on the screen of the second sharing device may also be moved together; if the screen of the first sharing device is clicked, the content on the screen of the second sharing device may also present the selected object by clicking, or simultaneously present an application window started by clicking; if the screen of the first sharing device is zoomed in/out, the content on the screen of the second sharing device may also present the zoomed in or zoomed out result.

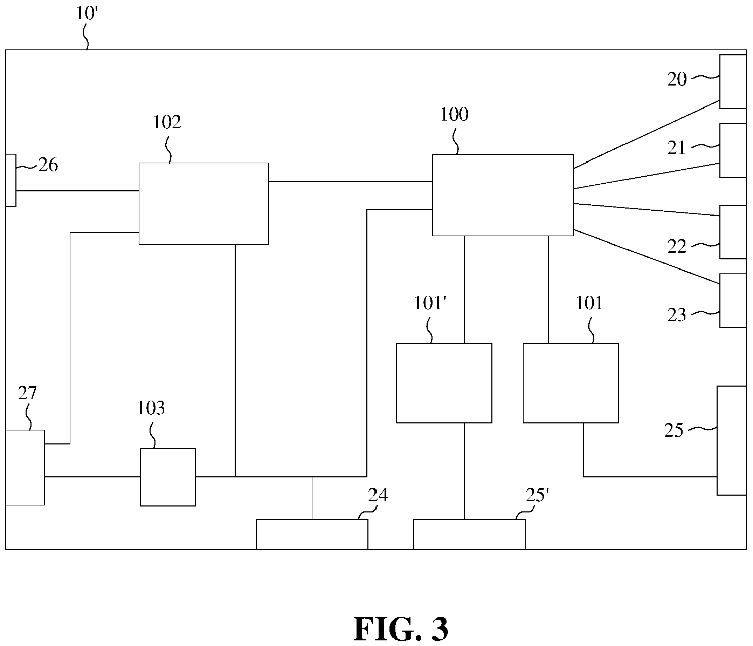

Further, in another embodiment, when all sharing devices connected to the sharing ports share/operate a screen image in a mirroring or extending manner, any two or more of the sharing devices may simultaneously share and operate the screen image. That is, the two or more sharing devices may be used as an extended screen of each other, and the individual screens of the two or more sharing devices may be spliced into a source screen for sharing with the sharing devices. As shown in FIG. 3, an additional bridge unit 101' is connected between the sharing port 25' and the multi-function control unit 100, wherein the additional bridge unit 101' may include or be implemented as a USB 3.1 Gen 1 hub controller, such as VIA Labs, Inc.'s product VL817 or Genesys Logic, Inc.'s product GL3523. The sharing port 25' may be a USB Type-C port. Similarly, the bridge unit 101' controls a data transmission between the sharing ports 24 and 25'. For example, the interface extension device 10 may be connected to three sharing devices, two of the three sharing devices are a first sharing device connected to the sharing port 24 and a second sharing device connected to the sharing port 25, the screen of the second sharing device is an extended screen of the first sharing device, and at least one application or object displayed on the extended screen can be operated on the second sharing device, and the screen of the first sharing device may synchronously present the operational result of the second sharing device. The remaining one of the three sharing devices is a third sharing device connected to the sharing port 25', which is used as another extended screen of the first sharing device or the second sharing device, and at least one application or object displayed on the other extended screen can be operated on the third sharing device, and the screen of the first and/or second sharing devices may synchronously present the operational result of the third sharing device. When the extended part of the first and/or second sharing device on the third sharing device is dragged in the third sharing device, the content on the screen of the first and/or second sharing device may also be moved together. When the extended part of the first and/or second sharing device on the third sharing device is clicked in the third sharing device, the content on the screen of the first and/or second sharing device may also present the selected object by clicking, or simultaneously present an application window started by clicking. When the extended part of the first and/or second sharing device on the third sharing device is zoomed in or out in the third sharing device, the content on the screen of the first and/or second sharing device may also present the zoomed in or zoomed out result. Furthermore, when the extended part on the third sharing device is operated on the third sharing device, an operation performed on the screen of the first and/or second sharing device may also simultaneously present an operational result on the first, second and third sharing devices. For example, when the extended part of the first and/or second sharing device on the third sharing device is dragged, the content on the screen of the first and/or second sharing device may also be moved together, and meanwhile, if the screen of the first and/or second sharing device is dragged, the content on the screen of the third sharing device may also be moved together; if the screen on the first and/or second sharing device is clicked, the content on the screen of the third sharing device may also present the selected object by clicking, or simultaneously present an application window started by clicking; if the screen of the first and/or second sharing device is zoomed in/out, the content on the screen of the third sharing device may also present the zoomed in or zoomed out result. When the extended part of the first and/or second sharing device on the third sharing device is clicked, the content on the screen of the first and/or second sharing device may also present the selected object by clicking, or simultaneously present an application window started by clicking, and meanwhile, if the screen of the first and/or second sharing device is dragged, the content on the screen of the third sharing device may also be moved together; if the screen of the first and/or second sharing device is clicked, the content on the screen of the third sharing device may also present the selected object by clicking, or simultaneously present an application window started by clicking; if the screen of the first and/or second sharing device is zoomed in/out, the content on the screen of the third sharing device may also present the zoomed in or zoomed out result. When the extended part of the first and/or second sharing device on the third sharing device is zoomed in/out, the content on the screen of the first and/or second sharing device may also present the zoomed in or zoomed out result, and meanwhile, if the screen of the first and/or second sharing device is dragged, the content on the screen of the third sharing device may also be moved together; if the screen of the first and/or second sharing device is clicked, the content on the screen of the third sharing device may also present the selected object by clicking, or simultaneously present an application window started by clicking; if the screen of the first and/or second sharing device is zoomed in/out, the content on the screen of the third sharing device may also present the zoomed in or zoomed out result. It should be noted that in other embodiments, the number of the sharing devices connected to the sharing ports may be increased according to actual needs, and the above-mentioned number is only used as an illustrative example, and is not used to limit the present invention.

Through the interface extension device of the present invention, in addition to allowing multiple terminals, such as mobile phones, tablet PCs and computers, to share media more effectively. It also allows multiple terminals to share/operate the media content of each other.

The present invention is not limited to the above-mentioned embodiments. It is obvious to those skilled in the art that various modifications and changes can be made to the present invention without departing from the spirit or scope of the present invention.

Therefore, the present invention is intended to cover the modifications and changes made to the present invention or falling within the scope of the attached claims and its equivalent scope.

Provided is an interface extension device for screen sharing, including at least one video port; at least one multi-function port; a first sharing port; a second sharing port; a multi-function control unit connected to the at least one multi-function port and the first sharing port; a bridge unit connected to the multi-function control unit and the second sharing port; and an image control unit connected to the multi-function control unit and the at least one video port. The bridge unit controls a data transmission between the first sharing port and the second sharing port. A screen connected to the at least one video port can display an image in a mirroring or extending manner by a first sharing device connected to the first sharing port and a second sharing device connected to the second sharing port through the data transmission, and the first sharing device and the second sharing device can perform a synchronous operation on the image.

## Claims

1. An interface extension device for screen sharing comprising:
at least one video port;
at least one multi-function port;
a first sharing port;
a second sharing port;
a multi-function control unit connected to the at least one multi-function port and the first sharing port;
a bridge unit connected to the multi-function control unit and the second sharing port; and
an image control unit connected to the multi-function control unit and the at least one video port;
wherein the bridge unit controls a data transmission between the first sharing port and the second sharing port, a screen connected to the at least one video port is capable of displaying an image in a mirroring or extending manner by a first sharing device connected to the first sharing port and a second sharing device connected to the second sharing port through the data transmission, and the first sharing device and the second sharing device are capable of performing a synchronous operation on the image.

2. The interface extension device according to claim 1, further comprising:
a power unit connected to the multi-function control unit and the image control unit, and connected to a power connection port.

3. The interface extension device according to claim 1, wherein the first and second sharing ports are a USB Type-C port.

4. The interface extension device according to claim 1, wherein the at least one video port is an HDMI port.

5. The interface extension device according to claim 1, wherein the at least one multi-function port includes a network port, a card reader port, and a USB 3.0 port.

6. The interface extension device according to claim 1, wherein the synchronous operation includes drag operation, click operation, zoom-in operation, and zoom-out operation.
